## Europäisches Patentamt

## European Patent Office

## Office européen des brevets

(11) Veröffentlichungsnummer: **0 246 533**
**B1**

(12) **EUROPÄISCHE PATENTSCHRIFT**

(45) Veröffentlichungstag der Patentschrift:
26.09.90

(21) Anmeldenummer: **87106836.7**

(22) Anmeldetag: **12.05.87**

(51) Int. Cl.⁵: **B01J 31/08**, C02F 1/20

(54) **Verwendung spezieller Katalysatorharze für die katalytische Reduktion von Sauerstoff in wässrigen Medien.**

(30) Priorität: **23.05.86 DE 3617273**

(43) Veröffentlichungstag der Anmeldung:
**25.11.87 Patentblatt 87/48**

(45) Bekanntmachung des Hinweises auf die Patenterteilung:
**26.09.90 Patentblatt 90/39**

(84) Benannte Vertragsstaaten:
**AT BE CH DE FR GB IT LI NL SE**

(56) Entgegenhaltungen:
**EP-A- 0 002 557**
**EP-A- 0 145 262**
**EP-A- 0 149 552**
**US-A- 4 111 856**

(73) Patentinhaber: **BAYER AG,
D-5090 Leverkusen 1 Bayerwerk(DE)**

(72) Erfinder: **Oeckl, Siegfried, Dr., Auf der Hoehe 74,
D-5060 Bergisch-Gladbach 1(DE)**
Erfinder: **Martinola, Friedrich, Dr.,
Leopold-Gmelin-Strasse 16, D-5000 Koeln 80(DE)**
Erfinder: **Thomas, Paul, Dipl.-Ing.,
Elisabeth-Langgaesser Strasse 35,
D-5090 Leverkusen 1(DE)**

ACTORUM AG

**Beschreibung**

Die Erfindung betrifft die Verwendung spezieller Katalysatorharze für die katalytische Reduktion von Sauerstoff in wäßrigen Medien. Als "Katalysatorharze" werden in der Fachwelt und im Rahmen der vorliegenden Erfindung mit katalytisch wirksamen Metallen beladene Ionenaustauscher auf Kunstharzbasis bezeichnet.

Verfahren zum Entfernen von Sauerstoff aus wäßrigen Medien durch katalytische Reduktion des Sauerstoffs mit Wasserstoff, Hydrazin oder Hypophosphit in Gegenwart von Katalysatorharzen sind bekannt (siehe zum Beispiel EP-B-0 065687 und EP-A-0 140587 und die in diesen Patentschriften genannten Druckschriften). Als Katalysatorharze wurden bislang in diesem Verfahren mit Palladium oder Platin beladene starksaure Kationenaustauscher und mit Palladium oder Platin beladene starkbasische Anionenaustauscher verwendet. In der Praxis hat sich jedoch gezeigt, daß die mit Palladium und Platin beladenen Kationenaustauscher den mit Palladium oder Platin beladenen stark basischen Anionenaustauschern unterlegen sind, weil sie das Edelmetall unter den Bedingungen des Sauerstoffentfernens aus wäßrigen Lösungen leichter abgeben und deshalb schneller an katalytischer Aktivität verlieren. Deshalb wurden für das Entfernen von Sauerstoff aus wäßrigen Medien vorzugsweise mit Palladium oder Platin beladene starkbasische Anionenaustauscher verwendet. Diese Katalysatorharze befriedigen aber noch nicht in ihrer thermischen, mechanischen und osmotischen Stabilität.

Es bestand daher die Aufgabe, Katalysatorharze aufzufinden, die unter den Bedingungen, unter denen Sauerstoff aus wäßrigen Medien durch katalytische Reduktion mit Wasserstoff, Hydrazin oder Hypophosphit entfernt wird, die katalytisch wirksamen Metalle hinreichend festgebunden enthalten und damit ihre katalytische Aktivität auch bei hoher Belastung langfristig beibehalten und die außerdem die für die Verwendung erforderliche hohe thermische, mechanische und osmotische Stabilität aufweisen.

Es wurde gefunden, daß Katalysatorharze, die katalytisch wirksame Metalle, wie Palladium oder Platin an makroporöse schwachbasische Anionenaustauscher auf Basis von vernetztem Polystyrol gebunden enthalten, die für einen erfolgreichen Einsatz bei der Entfernung von Sauerstoff aus wäßrigen Medium erforderlichen Eigenschaften, hohe Haftfestigkeit des katalytisch wirksamen Metalls bei gleichzeitig hoher thermischer, mechanischer und osmotischer Beständigkeit, aufweisen.

Katalysatorharze, die katalytisch wirksame Metalle wie Palladium und Platin an makroporöse schwachbasische Anionenaustauscher auf Basis von vernetztem Polystyrol gebunden enthalten, sind bekannt (siehe US-PS 4 111 856). Sie wurden jedoch nur für katalytische Reaktionen (Carbonylierungsreaktionen, Olefinisomerisierungen, Hydroformulierungen, Vinylesterherstellungen) angewendet, die von der erfindungsgemäß vorgesehenen Anwendung grundverschieden sind und in denen die für die katalytische Reduktion von Sauerstoff in wässrigen Medien geforderten Eigenschaften, insbesondere die mechanische und osmotische Beständigkeit, weder gefragt waren noch in Erscheinung treten konnten.

Die Erfindung betrifft daher ein verbessertes Verfahren zum Entfernen von Sauerstoff aus wäßrigen Medien durch katalytische Reduktion des Sauerstoffs mit Wasserstoff, Hydrazin oder Hypophosphit, vorzugsweise mit Wasserstoff oder Hydrazin, unter Verwendung von mit Palladium oder Platin beladenen Anionenaustauschern auf Basis von vernetztem Polystyrol als Katalysatoren, das dadurch gekennzeichnet ist, daß mit Palladium oder Platin beladene makroporöse schwachbasische Anionenaustauscher auf Basis von vernetztem Polystyrol als Katalysatoren verwendet werden.

Außer der bereits ganannten wesentlich verbesserten thermischen, mechanischen und osmotischen Stabilität weisen die erfindungsgemäß verwendeten Katalysatorharze folgende weiteren, für die katalytische Reduktion des Sauerstoffs in wäßrigen Medien unter technischen Bedingungen bedeutsamen Eigenschaften auf:

1. Sie sind leichter regenerierbar als die mit Palladium oder Platin beladenen starkbasischen Anionenaustauscher. Es bedarf keines Alkaliüberschusses, sondern nur der stöchiometrischen Menge Alkali, um das in beladenen Zustand in der Salzform vorliegende Katalysatorharz in die im regenerierten Zustand vorliegende Aminform zu überführen. In der Aminform ist das Katalysatorharz, da es keine Ionen binden kann, praktisch Ionenfrei und kann infolgedessen auch keine Ionen an das zu behandelnde wäßrige Medium abgeben. Diese Ionenfreiheit der erfindungsgemäß zu verwendenden Katalysatorharze ist von besonderer Bedeutung für das Entfernen von Sauerstoff aus Kondensaten und ähnlichen hochreinen Wässern, da bei deren Behandlung größter Wert darauf gelegt wird, daß bei dem Entfernen des Sauerstoffs keine Ionen in das behandelte Medium gelangen.

2. Im Gegensatz zu den Katalysatorharzen, die Palladium oder Platin an starkbasische Anionenaustauscher gebunden enthalten, verändern die erfindungsgemäß zu verwendenden Katalysatorharze die Ionen-Zusammensetzung der zu behandelnden wäßrigen Salzlösungen nicht. Mit Hilfe der erfindungsgemäß zu verwendenden Katalysatorharze läßt sich Sauerstoff aus wäßrigen Salzlösungen, zum Beispiel Heizkreislauf-Wässern entfernen, ohne daß eine Veränderung in der ionenmäßigen Zusammensetzung der Wässer eintritt.

3. Da die katalytische Aktivität der erfindungsgemäß zu verwendenden Katalysatorharze höher ist als die der Katalysatorharze, die Palladium oder Platin an starkbasische Anionenaustauscher gebunden enthalten, wird mit ihnen bei einer gegebenen spezifischen Belastung ein wesentlich geringerer Sauerstoff-Restgehalt in der behandelten wäßrigen Flüssigkeit erreicht, oder aber bei vorgegebenem Sauerstoff-Restgehalt, eine höhere spezifische Belastung, das heißt ein höherer Durchsatz an zu behandelndem wäßrigen Medium erreicht.

Die erfindungsgemäß zu verwendenden Katalysatorharze werden in gleicher Weise wie die bislang verwendeten Katalysatorharze eingesetzt. Die katalytische Wirksamkeit der erfindungsgemäß zu verwendenden Katalysatorharze ist unabhängig davon, ob die Aminogruppen des schwachbasischen Anionenaustauschers in freier Form oder in der Salzform vorliegen. Ob man die erfindungsgemäß zu verwendenden Katalysatorharze in Form der freien Basen oder in der Salzform einsetzt, hängt von dem wässrigen Medium ab, aus dem der Sauerstoff entfernt werden soll. Beim Entfernen von Sauerstoff aus Kondensaten und Kesselspeisewässern, oder allgemein wässrigen Medien, bei denen es darauf ankommt, daß bei dem Entfernen des Sauerstoffs keine Ionen in das behandelte Medium gelangen, wird man die erfindungsgemäß zu verwendenden Katalysatorharze in der Form ihrer freien Base einsetzen. Beim Entfernen von Sauerstoff aus Trink-, Meer und Brackwasser können die Harze auch in ihrer Salzform eingesetzt werden.

Die Herstellung der erfindungsgemäß zu verwendenden Katalysatorharze kann nach an sich bekannten Verfahren erfolgen, zum Beispiel durch Behandeln des schwachbasischen Anionenaustauschers mit der wässrigen Lösung eines Komplexsalzes, das Palladium oder Platin in Form eines anionischen Komplexes, zum Beispiel als $[PdCl_4]^-$ oder $[PtCl_6]^{--}$ enthält. Anschließend an die Adsorption des anionischen Metallkomplexes durch den Anionenaustauscher wird das Metallion, $Pd^{2+}$ oder $Pt^{4+}$, durch Behandeln des beladenen Anionenaustauschers mit Reduktionsmitteln, wie Hydrazin, Formaldehyd, Glukose u.s.w. zu den entsprechenden Metallen reduziert.

Man kann auch umgekehrt verfahren und den schwachbasischen Anionenaustauscher zunächst mit der Lösung des Reduktionsmittels tränken und dann mit der Komplexsalz-Lösung behandeln und die Metalle auf diese Weise auf dem schwachbasischen Anionenaustauscher ausfällen.

Schließlich kann man auch kolloidal verteiltes, schon reduziertes Metall, zum Beispiel Palladium, aus einer entsprechenden Lösung bzw. Suspension vom schwachbasischen Anionenaustauscher adsorptiv aufnehmen lassen.

Es hat sich jedoch gezeigt, daß für die katalytische Reduktion von Sauerstoff in wässrigen Medien besonders geeignete, mit Palladium oder Platin beladene, makroporöse schwachbasische Anionenaustauscher auf Basis von vernetztem Polystyrol erhalten werden, wenn man die schwachbasischen Anionenaustauscher zunächst mit verdünnter wässriger Mineralsäure, vorzugsweise verdünnter wässriger Salzsäure, vorbehandelt und erst nach dieser Säurebehandlung mit der wässrigen Lösung eines Komplexsalzes des katalytisch wirksamen Metalls, das das Metall in Form eines anionischen Komplexes enthält, tränkt und anschließend der Reduktionsbehandlung unterwirft.

Es wurde festgestellt, daß durch diese Vorbehandlung mit Mineralsäure Katalysatorharze erhalten werden, in denen das katalytisch wirksame Metall, insbesondere Palladium, besonders fest gebunden ist. Bei Praxisbedingungen simulierenden Testen (Belastung mit Aktivchlor und Belastung mit 10%iger wässriger Salzsäure, wie sie bei unbeabsichtigten Kontaminierungen oder aber auch bei Reinigungs-und Desinfektionsbehandlungen der Katalysatorharze erforderlich sein können) wurde festgestellt, daß bei der Behandlung der erfindungsgemäß zu verwendenden Katalysatorharze mit Chlorbleichlauge, mit einem Chlorgehalt von 3 mg/l Lauge, bei einer spezifischen Belastung von 10 Bettvolumina Lauge/h der Palladium-Verlust des Harzes nach einem Durchsatz von 50 Bettvolumina Chlorlauge nur 4 und nach einem Durchsatz von 500 Bettvolumina Chlorbleichlauge nur 10 Gewichts-% der ursprünglichen auf dem Harz befindlichen Palladiummenge betrug. Beim 24-stündigen Aufbewahren der bei der Herstellung mit Säure vorbehandelten, erfindungsgemäß zu verwendenden Katalysatoren in 2 Bettvolumina 10%iger wässriger Salzsäure betrug der Palladium-Verlust nur 11 Gew.-% der ursprünglich auf dem Katalysatorharz befindlichen Palladium-Menge.

Daher werden erfindungsgemäß bevorzugt solche Katalysatoren verwendet, in denen die als Träger für die katalytisch wirksamen Metalle, vorzugsweise Palladium, verwendten makroporösen, schwachbasischen Anionenaustauscher zunächst mit verdünnter wässriger Mineralsäure vorbehandelt, und erst nach dieser Säurebehandlung das Harz mit der wäßrigen Lösung des Komplexsalzes des katalytisch wirksamen Metalls, die das Metall in Form eines anionischen Komplexes enthält, getränkt und anschließend der Reduktionsbehandlung unterworfen wurden.

Die Vorbehandlung der schwachbasischen Anionenaustauscher mit wässrigen Mineralsäuren wird in der Weise vorgenommen, daß man den schwachbasischen Anionenaustauscher in der wäßrigen, 0,1 Gew.-%igen bis 30 Gew.-%igen Salzsäure suspendiert und die Suspension bei Raumtemperatur solange rührt, bis sich der pH-Wert der wässrigen Lösung nicht mehr ändert. Im allgemeinen sind hierfür, je nach Ansatzgröße, 10 Minuten bis 3 Stunden erforderlich.

Die Menge an wässriger Salzsäure wird für die Vorbehandlung so bemessen, daß auf 1 Mol Aminogruppen im Anionenaustauscher 0,1 bis 3 Mol HCl, vorzugsweise 0,2 bis 1,0 Mol HCl entfallen.

Es wurde weiterhin gefunden, daß sich durch die Wahl der Säuremenge bei der Vorbehandlung die Verteilung des Metalls im Anionenaustauscherkorn einstellen läßt. Während bei der Anwendung von 0,1 bis 0,3 Mol HCl je Mol Aminogruppen im schwachbasischen Anionenaustauscher eine Anreicherung des Metalls in der äußeren Schale des Harzkorns stattfindet, führt die Anwendung von 1,0 bis 2,0 Mol HCl je Mol Aminogruppen zu einer annähernd gleichmäßigen Verteilung des Metalls über den gesamten Querschnitt des Harzkornes. Die Anwendung von 0,4 bis 0,9 Mol HCl je Mol Aminogruppen führt zu einer Verteilung des Metalls im Harzkorn, die zwischen den beiden vorgenannten Extremfällen liegt.

Die den erfindungsgemäß zu verwendenden Katalysatorharzen zugrunde liegenden schwachbasischen Anionenaustauscher auf Basis von vernetztem Polystyrol sind vernetzte Polystyrole, die als funktioinelle Gruppen primäre, sekundäre oder tertiäre Aminogruppen enthalten. Für die Herstellung der erfindungsgemäß zu verwendenden Katalysatorharze werden vorzugsweise solche schwachbasischen Anionenaustauscher verwendet, in denen das Polystyrol durch 4–12 Gew.-% Divinylbenzol vernetzt ist, die einen Gehalt an primären, sekundären und/oder tertiären Aminogruppen von 1,0– 2,0 Mol/l Harz aufweisen und deren mittlerer Porendurchmesser 50–1000 Å und deren innere Oberfläche 5–200 m²/g Harz beträgt.

Die Verteilung des Metalls innerhalb der Katalysatorharze ist von großer Bedeutung für die katalytische Wirksamkeit der erfindungsgemäß zu verwendenden Katalysatorharze, da die Verteilung des katalytisch wirksamen Metalls im Harzkorn die Aktivität des Katalysatorharzes in dem Sinne beeinflußt, daß bei der Anreicherung des Metalls in der äußeren Schale des Harzkorns die katalytische Aktivität des Harzes bei gegebenen Metallgehalt am höchsten ist, während bei gleichmäßiger Verteilung des Metalls über den gesamten Querschnitt des Harzkorns bei gleichem Metallgehalt eine geringere katalytische Aktivität aber bei gleicher spezifischer Belastung eine längere Lebensdauer des Katalysatorharzes erhalten wird. Das erfindungsgemäße Verfahren ermöglicht daher, die Aktivität des Katalysatorharzes dem jeweiligen Verwendungszweck anzupassen. Dies ist von großer technischer Bedeutung, da es sich bei den von Sauerstoff zu befreienden wäßrigen Medien um sehr verschiedenartig zusammengesetzte wäßrige Lösungen handelt. Da sind zum einen die fast ionenfreien Kondensate und Kesselspeisewässer; sie fallen in großen Mengen an und erfordern daher kinetisch und mechanisch hochbelastbare hochaktive Katalysatorharze, die außerdem keine Stoffe an das behandelte Medium abgeben. Zum anderen hat man die in den Heizkreisläufen verwendeten Wässer; sie können hohe Temperaturen aufweisen und Salze und Zusatzstoffe enthalten. Sie erfordern in erster Linie thermisch und chemisch belastbare Katalysatorharze.

Aus der US-PS 4 111 856 ist zwar bekannt, daß man durch Zugabe von Kaliumchlorid zur wäßrigen Lösung des Metallkomplexsalzes das Eindringen des Palladiums in das Harzkorn steuern kann. Diese Steuerung der Palladiumsalzaufnahme mittels Kaliumchlorid hat jedoch den Nachteil, daß sie von vielen Faktoren, z.B. Konzentration, Strömung, Temperatur, beeinflußt wird und daher leicht zu stören und schwer zu reproduzieren ist. Die erfindungsgemäße Vorbehandlung der schwachbasischen Anionenaustauscher mit wäßrigen Mineralsäuren ist von den äußeren Faktoren weit weniger abhängig und liefert auf einfache Weise eine reproduzierbare Verteilung des Metalls im Harzkorn.

Von den erfindungsgemäß zu verwendenden Katalysatorharzen sind nur die mit Palladium und Platin beladenen makroporösen schwachbasischen Anionenaustauscher beschrieben, die als Aminogruppe eine tertiäre Aminogruppe aufweisen. Überraschenderweise wurde gefunden, daß mit Platin oder – vorzugsweise – Palladium beladene makroporöse schwachbasische Anionenaustauscher, die als Aminogruppe eine sekundäre oder – vorzugsweise – eine primäre Aminogruppe enthalten bei der katalytischen Reduktion von Sauerstoff in wässrigen Medien eine wesentlich höhere katalytische Wirksamkeit aufweisen, als die Katalysatorharze mit tertiärer Aminogruppe.

Vorzugsweise handelt es sich bei diesen erfindungsgemäß zu verwendenden Katalysatorharzen um mit 0,01–10 g Palladium/l Harz beladene, makroporöse, schwachbasische Anionenaustauscher auf Basis von mit 4–12 Gew.-% Divinylbenzol vernetztem Polystyrol, deren Gehalt an primären Aminogruppen 1,0–2 Mol je l Harz beträgt und die einen mittleren Porendurchmesser von 50–1000 Å und eine innere Oberfläche von 5–2000 m²/g Harz aufweisen.

Das Trägermaterial, die makroporösen schwachbasischen Anionenaustauscher auf Basis von vernetztem Polystyrol mit primären Aminogruppen, und seine Herstellung aus Perlpolymerisaten von vernetztem Polystyrol durch Chlormethylierung und anschließende Umsetzung mit Ammoniak oder durch unmittelbare Aminomethylierung sind bekannt (siehe Ullmann, Enzyklopädie der technischen Chemie, 4. Auflage, Band 13, Seiten 301-302).

## Beispiel 1

100 ml makroporöser, schwachbasischer Anionenaustauscher auf Basis von mit 8 Gew.-% Divinylbenzol vernetztem Polystyrol (mittlerer Porendurchmesser: 400 Å; innere Oberfläche: 30 m²/g Harz; Total-Kapazität an Dimethylaminogruppen: 1,8 Mol/l Harz) werden in 130 ml 1,15 %iger wäßriger HCl (0,23 Mol HCl/Mol Aminogruppen) suspendiert. Die Suspension wird bei Raumtemperatur so lange gerührt, bis sich ein konstanter pH-Wert in der wässrigen Phase eingestellt hat (pH-Wert 4,0 nach 30 Minuten).

Die Suspension wird anschließend unter Rühren portionsweise mit der Lösung von 0,27 g $Na_2[PdCl_4]$ (= 0,1 g Pd) in 10 ml 0,01 %iger HCl versetzt.

Nach jeder Zugabe entfärbt sich die zunächst gelbbraune Suspension innerhalb weniger Sekunden und das anfangs hellbeige-farbene Harz nimmt allmählich einen gelblich-hellbraunen Farbton an. In einer Probe der überstehenden farblosen Lösung ist kein Palladium mehr nachweisbar.

Zur Reduktion des 2-wertigen Palladiums zum metallischen Palladium wird die Suspension unter Rühren mit einem Gemisch aus 25 ml 20 %iger NaOH und 2,5 ml 20 %iger Hydrazinhydratlösung versetzt.

Dabei nimmt das Harz sehr rasch eine dunkle Farbe an und der pH-Wert der wässrigen Lösung steigt auf 13,4.

Dann wird der mit Palladium beladene Anionenaustauscher abgetrennt, zunächst mit verdünnter NaOH/Hydrazin-Lösung (zur Herabsetzung des Chloridgehaltes des Harzes) und anschließend mit entmineralisiertem Wasser gewaschen.

Das auf diese Weise erhaltene Katalysatorharz ist graubraun. Die elektronenmikroskopische Untersuchung (Röntgenmikroanalyse) eines Harzkorndünnschnittes zeigt, daß sich über 80 % des aufgebrachten Palladiums in einer 10 μ dicken Schicht an der Oberfläche des Harzkornes befinden.

| Abstand vom äußeren Harzrand | relative Palladium-Konzentration |
|---|---|
| 0 μ | 110 |
| 2,5 μ | 80 |
| 5,0 μ | 48 |
| 10,0 μ | 6 |

Beispiel 2

Es wird wie in Beispiel 1 beschrieben verfahren, mit dem einzigen Unterschied, daß die Vorbehandlung des Anionenaustauschers mit 150 ml 5%iger HCl (1,15 Mol HCl/Mol Aminogruppen) vorgenommen wurde. Am Ende der Vorbehandlung hatte sich in der wäßrigen Phase ein pH-Wert von 0,7 eingestellt.

Das mit Pd$^{2+}$ beladene Harz wies eine rötlich-hellbraune Farbe auf. Für die Reduktion wurde ein Gemisch aus 120 ml 20 %iger NaOH und 2,5 ml 20 %iger Hydrazinhydratlösung verwendet. Der pH-Wert der Reduktionslösung betrug 13,5.

Das auf diese Weise erhaltene Katalysatorharz war dunkelgrau gefärbt.

Die elektronenmikroskopische Untersuchung eines Harzkorndünnschnittes ergab, daß das Pd weitgehend gleichmäßig über den Harzquerschnitt (mit abnehmender Konzentration zur Harzkornmitte) verteilt ist.

Beispiel 3

Es wurde wie in Beispiel 1 beschrieben verfahren, nur wurde die Vorbehandlung des Anionenaustauschers mit 130 ml 2,3 %iger HCl (0,46 Mol HCl/Mol Aminogruppen) vorgenommen.

Zur Reduktion wurde ein Gemisch aus 50 ml 20 %iger NaOH und 2,5 ml 20 %iger Hydrazinhydratlösung verwendet.

Der Farbton des auf diese Weise erhaltenen Katalysatorharzes lag zwischen den Farbtönen der in Beispielen 1 und 2 erhaltenen Katalysatorharze. Die Röntgenmikroanalyse eines Harzkorndünnschnittes ergab eine Palladiumverteilung innerhalb des Harzkorns, die zwischen der Verteilung der gemäß Beispielen 1 und 2 erhaltenen Katalysatorharze liegt.

| Abstand vom äußeren Harzrand | relative Palladium-Konzentration |
|---|---|
| 1 µ | 38 |
| 10 µ | 36 |
| 20 µ | 32 |
| 30 µ | 25 |
| 40 µ | 16 |
| 50 µ | 3 |

Beispiel 4

50 ml makroporöser schwachbasischer Anionenaustauscher auf Basis von mit 8 Gew.-% Divinylbenzol vernetztem Polystyrol (mittlerer Porendurchmesser: 400 Å; innere Oberfläche: 30 m²/g; Total-Kapazität an Aminomethylgruppen: 2,5 Mol/l Harz) werden in 65 ml 1,15 %iger HCl (0,16 Mol HCl/Mol Aminogruppen) suspendiert. Nach 30-minütigem Rühren hat sich in der wäßrigen Phase der Suspension ein pH-Wert von 7,3 eingestellt.

Die Suspension wird portionsweise unter Rühren mit der Lösung von 0,13 g Na$_2$[PdCl$_4$] (= 0,05 g Pd) in 5 ml ca. 0,1 %iger HCl versetzt.

Zur Reduktion des Pd$^{2+}$ zum metallischen Pd wird die Suspension unter Rühren mit einem Gemisch aus 2,5 ml 20 %iger NaOH und 1,25 ml 20%iger Hydrazinhydratlösung versetzt. Bei dieser Reduktion nimmt das zunächst beige farbene Harz eine bräunliche Farbe an. Die Röntgenmikroanalyse eines Harzkorndünnschnittes ergab, daß sich das gesamte Palladium in einer 6 µ dicken Schicht an der Oberfläche des Harzkorns befindet.

| Abstand vom äußeren Harzrand | relative Palladiumkonzentration |
|---|---|
| 1 µ | 174 |
| 5 µ | 0 |

Beispiel 5

Es wird wie in Beispiel 4 beschrieben verfahren, jedoch mit dem Unterschied, daß die Vorbehandlung des Anionenaustauschers mit 75 ml 5%iger HCl (0,8 Mol HCl/Mol Aminogruppen) vorgenommen wurde. Bei der Säurebehandlung stellte sich in der wäßrigen Phase ein konstanter pH-Wert von 4,5 ein.

Die Reduktion wurde mit einem Gemisch aus 60 ml 20 %iger NaOH und 1,25 ml 20 %iger Hydrazinhydratlösung vorgenommen. Im Gegensatz zu Beispiel 4 trat bei der Reduktion nur eine schwache Farbänderung des Harzes ein. Die Röntgenmikroanalyse eines Harzkorndünnschnittes ergab eine gegenüber Beispiel 4 breitere Verteilung des Palladiums über den Harzquerschnitt.

| Abstand vom äußeren Harzrand | relative Palladium-Konzentration |
|---|---|
| 1 µ | 59 |
| 5 µ | 24 |
| 10 µ | 10 |
| 25 µ | 0 |

Bei dem in den folgenden Beispielen 6, 7, 8 und 10 als "Katalysatorharz gemäß Stand der Technik" bezeichneten Harz handelt es sich um das bislang für die Sauerstoffreduktion in wäßrigen Medien verwendete Katalysatorharz-Lewatit OC 1045. Dieses Katalysatorharz, ein mit Palladium beladener, makroporöser, starkbasischer Anionenaustauscher, ist in den Beispielen 2 und 3 der EP-B-O 065 687 beschrieben und wird in der EP-A-0 140 587 als Prototyp der für die katalytische Sauerstoffreduktion verwendeten Katalysatorharze genannt.

Beispiel 6

Stabilitätstest (mechanische und osmotische Stabilität)

Beschreibung des Tests:

Das zu prüfende Katalysatorharz wird in einem Filterrohr (Länge: 700 mm, Durchmesser: 15 mm) bis zu einer Schichthöhe von 50 cm eingefüllt. Anschließend wird das Harz unter einem konstanten Druck von 2,5 bar wiederholt einem aus folgenden Teilschritten, Beladen mit 0,5 n Salzsäure, Spülen mit entsalztem Wasser, Beladen mit 0,5 n Natronlauge, Spülen mit entsalztem Wasser, bestehenden Beladungszyklus ausgesetzt. HCl und NaOH werden von unten nach oben und das entmineralisierte Wasser von oben nach unten durch die Katalysatorharzschicht geleitet. Infolge der schlagartig wechselnden Strömungsrichtungen wird die Harzschicht jeweils plötzlich entspannt und, einem Kolben gleich, auf-oder abwärts gestoßen und durch die hohe Strömungsgeschwindigkeit von 100 - 200 m/h gegen den jeweiligen Filterboden gepreßt. Dadurch wird das Harz mechanisch beansprucht. Zugleich tritt bei jedem Richtungs(Flüssigkeits)wechsel ein Quellungs(osmotischer) Schock durch den sehr raschen Austausch von Säure oder Lauge gegen entmineralisiertes Wasser und umgekehrt ein.

Mit fortschreitender Zerstörung des Katalysatorharzes durch die mechanische und osmotische Belastung steigt der Anteil an Bruchstücken und damit der Druck in der Filtersäule an. Infolgedessen sinkt bei gleichbleibendem Vordruck von 2,5 bar die Durchflußmenge. Die Durchflußmenge dient als Maß für die Beständigkeit des Harzes.

In der folgenden Tabelle sind die bei der Untersuchung des Katalysatorharzes gemäß Beispiel 1 und des Katalysatorharzes gemäß Stand der Technik erhaltenen Ergebnisse (Durchflußmengen in Abhängigkeit von der Zahl der Beladungszyklen) zusammengestellt.

Tabelle 1

| Anzahl der Beladungs-Zyklen | Durchflußmenge [l/h] | |
|---|---|---|
| | Katalysator-harz gemäß Beispiel 1 | Katalysator-harz gemäß St. d. T. |
| 1 | 120 | 132 |
| 20 | 119 | 113 |
| 40 | 118 | 98 |
| 60 | 118 | 87 |
| 80 | 118 | 81 |
| 100 | 118 | 78 |
| 120 | 118 | 73 |
| 140 | 118 | 70 |
| 160 | 118 | 66 |
| 180 | 118 | 63 |

Aus den in Tabelle 1 angegebenenen Daten geht die hervorragende mechanische und osmotische Stabilität des erfindungsgemäß zu verwendenden Katalysatorharzes gemäß Beispiel 1 hervor. Die gemäß Beispielen 2, 4 und 5 erhaltenen, erfindungsgemäß zu verwendenden Katalysatorharze besitzen eine vergleichbare mechanische und osmotische Stabilität.

Beispiel 7 (Test zur Bestimmung der thermischen Stabilität)

Beschreibung des Tests:

41 - 42 ml des zu untersuchenden Katalysatorharzes werden in einen mit Teflon ausgekleideten 45 ml-Miniautoklaven eingebracht. Die Zwischenräume zwischen den Harzperlen werden mit entmineralisiertem Wasser gefüllt. Anschließend wird der Autoklav verschlossen und auf die in der nachstehenden Tabelle 2 angegebenen Reaktionstemperaturen für die ebenfalls in Tabelle 2 angegebenen Reaktionszeiten erhitzt. Bestimmt werden das Volumen des Katalysatorharzes vor und nach dem Erhitzen (Volumen v.E. und Volumen n.E.), die HCl-Zahl [Mol/l Harz] vor und nach dem Erhitzen (HCl-Zahl v.E. und HCl-Zahl n.E.) und die Totalkapazität des Katalysatorharzes vor und nach dem Erhitzen (Totalkapazität v.E. und n.E.). Aus der Differenz zwischen dem Volumen vor und nach dem Erhitzen, der HCl-Zahl vor und nach dem Erhitzen und der Totalkapzität vor und nach dem Erhitzen ergibt sich das Ausmaß, in dem das Harz während der Hitzebehandlung abgebaut wurde.

Tabelle 2

| Eigenschaften des untersuchten Katalysatorharz | Katalysator gemäß Stand der Technik (OH-Form) | | | Katalysatorharz Beispiel 2 (in Form der freier Base) | | |
|---|---|---|---|---|---|---|
| HCl-Zahl v.E. (Mol/l Harz) | 0,100 | | | 1,94 | | |
| Totalkapazität v.E. (Mol/l Harz) | 1,463 | | | 1,94 | | |
| Volumen v.E. (ml) | 42,0 | 42,0 | 42,0 | 41,0 | 41,0 | 42,0 |
| Reaktionstemperatur ($^{0}$C) | 130 | 150 | 180 | 130 | 150 | 180 |
| Reaktionszeit (h) | 145 | 136 | 102 | 145 | 136 | 102 |
| Volumen n.E. (ml) | 16,5 | 15,0 | 15,0 | 31,5 | 31,0 | 30,5 |
| Volumenabnahme (%) | 60,7 | 64,3 | 64,3 | 23,2 | 24,4 | 27,4 |
| HCl-Zahl n.E.(Mol/l) | 0,343 | 0,206 | 0,113 | 1,86 | 1,81 | 1,69 |
| Totalkapazität (Mol/l) n.E. | 0,681 | 0,382 | 0,193 | 1,86 | 1,81 | 1,69 |
| Abnahme der Totalkapazität (%) | 53,5 | 73,9 | 86,8 | 4,1 | 6,7 | 12,9 |

Aus den in der Tabelle angegebenen Werten geht hervor, daß das Katalysatorharz gemäß Beispiel 2 bei der Temperaturbelastung wesentlich weniger abgebaut wurde, als das Katalysatorharz gemäß Stand der Technik.

Vergleichbare Ergebnisse wurden auch mit den in den Beispielen 1, 4 und 5 beschriebenen Katalysatorharzen erhalten.

Beispiel 8 (Bestimmung der katalytischen Wirksamkeit der Katalysatorharze)

Beschreibung des Tests:

30 ml Katalysatorharz der einheitlichen Kornfraktion 0,5 - 1,0 mm werden in eine Glassäule (⌀: 22 mm) eingefüllt. Durch dieses Harzbett wird von oben nach unten bei 19 - 20°C mit Sauerstoff gesättigtes, entmineralisiertes Wasser mit einem Gehalt von 11,6 - 12,0 ppm Hydrazin gepumpt. Der Rest-Sauerstoffgehalt in dem aus dem Harzbett ablaufenden Wasser wird bei unterschiedlichen spezifischen Belastungen mit einem handelsüblichen Sauerstoffmeßgerät gemessen. In der nachstehenden Tabelle 3 sind die, für die untersuchten Katalysatorharze bei den angegebenen spezifischen Belastungen gefundenen $O_2$-Restgehalte zusammengestellt.

Tabelle 3

| eingesetztes Katalysatorharz | $O_2$-Gehalt im Zulauf ($\mu g/l$) | $O_2$-Restgehalt ($\mu g/l$) bei folgenden spezifischen Belastungen (BV/h) | | | |
|---|---|---|---|---|---|
| | | 600 | 500 | 400 | 300 |
| Katalysatorharz gemäß Beispiel 4 | 9 750 | 147,5 | 63,0 | 35,0 | 15,7 |
| Katalysatorharz gemäß Beispiel 1 | " | 459,0 | 103,5 | 52,5 | 22,8 |
| Katalysatorharz gemäß Beispiel 2 | " | 950,0 | 535,0 | 330,0 | 160,( |
| Katalysatorharz gemäß Stand der Technik | " | 3530 | 2900 | 2490 | 1636 |

Beispiel 9

Die in dem Beispielen 4 und 5 beschriebenen Katalysatorharze wurden dem in Beispiel 8 beschriebenen Aktivitätstest unterworfen. Der Hydrazin-Gehalt des bei 19 -20°C mit $O_2$-gesättigten, entmineralisierten Wassers betrug jedoch nur 10,2 ppm. In der nachstehenden Tabelle 4 sind die für die beiden untersuchten Katalysatorharz bei den angegebenen spezifischen Belastungen gefundenen $O_2$-Restgehalte im ablaufenden Wasser zusammengestellt.

## Tabelle 4

| einge-setztes Katalysa-torharz | O$_2$-Gehalt im Zulauf [µg/l] | O$_2$-Restgehalt (µg/l) bei folgenden spezifischen Be-lastungen (BV/h) | | | | | |
|---|---|---|---|---|---|---|---|
| | | 600 | 500 | 400 | 300 | 200 | 100 |
| Katalysa-torharz ge-mäß Bei-spiel 4 | 9800 | 170,2 | 110,2 | 66,1 | 34,6 | 22,0 | 15,3 |
| Katalysa-torharz ge-mäß Bei-spiel 5 | 9800 | 944,0 | 670,0 | 396,0 | 180,1 | 104,5 | 23,3 |

Beispiel 10 (Bestimmung des Auswaschverhaltens der Katalysatorharze)

Beschreibung des Verfahrens:

300 ml des zu untersuchenden Katalysatorharzes werden in ein beheizbares Laborfilter eingefüllt und von 90 - 98°C heißem, vollentsalztem Wasser durchströmt. (Spezifische Belastung 50 BV/h). Hinter dem Filter wird das Wasser auf Raumtemperatur abgekühlt und durch eine Leitfähigkeitsmeßzelle geleitet. Die mit den beiden untersuchten Katalysatorharzen nach den verschiedenen Durchsätzen gefundenen Leitfähigkeits-Werte sind in der nachstehenden Tabelle 5 zusammengestellt:

## Tabelle 5

| Durchsatz (BV) | Leitfähigkeit (µS/cm) | |
|---|---|---|
| | Katalysatorharz gemäß Beispiel 1 | Katalysatorharz gemäß Stand der Technik |
| 50 | 1,05 | 17,5 |
| 100 | 0,95 | 10,9 |
| 150 | 0,87 | 10,9 |

Aus der Tabelle geht hervor, daß von dem in Beispiel 1 beschriebenen Katalysatorharz nur ein Bruchteil der Ionen an das behandelte Wasser abgegeben wird, die das Katalysatorharz gemäß Stand der Technik an das behandelte Wasser abgibt.

Mit den Katalysatorharzen gemäß Beispielen 2, 4 und 5 werden praktisch die gleichen Leitfähigkeitswerte erhalten wie mit dem Katalysatorharz gemäß Beispiel 1.

## Patentansprüche

1. Verwendung von mit Palladium oder Platin beladenen makroporösen schwachbasischen Anionenaustauschern auf Basis von vernetztem Polystyrol als Katalysatoren zum Entfernen von Sauerstoff aus wässrigen Medien durch katalytische Reduktion.

2. Verfahren zum Entfernen von Sauerstoff aus wässrigen Medien, durch katalytische Reduktion des Sauerstoffs unter Verwendung von mit Palladium oder Platin beladenen Anionenaustauschern auf Basis von vernetztem Polystyrol als Katalysatoren, dadurch gekennzeichnet, daß mit Palladium oder Platin beladene makroporöse schwachbasische Anionenaustauscher auf Basis von vernetztem Polystyrol als Katalysatoren verwendet werden.

3. Verfahren gemäß Anspruch 2, dadurch gekennzeichnet, daß als Katalysatoren mit Palladium beladene makroporöse schwachbasische Anionenaustauscher verwendet werden, die einen Gehalt an primären, sekundären und/oder tertiären Aminogruppen von 1,0–2,0 Mol/l Harz aufweisen, deren mittlerer Porendurchmesser 50–1000 Å und deren innere Oberfläche 5–200 m²/g Harz beträgt und in denen das Polystyrol durch 4 – 12 Gew.-% Divinylbenzol vernetzt ist.

4. Verfahren gemäß Anspruch 2, dadurch gekennzeichnet, daß als Katalysatoren solche mit Palladium oder Platin beladenen, makroporösen, schwachbasischen Aminoaustauscher verwendet werden, die durch eine Vorbehandlung mit verdünnter wäßriger Mineralsäure, anschließendes Tränken mit der wäßrigen Lösung eines Komplexsalzes des Palladiums oder Platins, die das Metall in Form eines anionischen Komplexes enthält, und anschließende Reduktion erhalten wurden.

## Claims

1. Use of macroporous weakly-basic anion exchangers, charged with palladium or platinum and based on crosslinked polystyrene, as catalysts for the removal of oxygen from aqueous media by catalytic reduction.

2. Process for the removal of oxygen from aqueous media by catalytic reduction of the oxygen using anion exchangers, charged with palladium or platinum and based on crosslinked polystyrene as catalysts, characterized in that macroporous weakly-basic anion exchangers, charged with palladium or platinum and based on crosslinked polystyrene are used as catalysts.

3. Process according to Claim 2, characterized in that macroporous weakly-basic anion exchangers, charged with palladium and containing 1.0–2.0 mol of primary, secondary and/or tertiary amino groups per litre of resin and whose average pore diameter is 50–1000 Å and whose internal surface area is 5–200 m²/g of resin and in which the polystyrene is crosslinked by 4–12% by weight of divinylbenzene are used as catalysts.

4. Process according to Claim 2, characterized in that the catalysts used are macroporous weakly-basic anion exchangers charged with palladium or platium which have been obtained by pretreating with dilute aqueous mineral acid and subsequently steeping in the aqueous solution of a complex salt of palladium or platinum which contains the metal in the form of an anionic complex, and subsequent reduction.

## Revendications

1. Utilisation d'échangeurs d'anions faiblement basiques, macro-poreux et chargés de palladium ou de platine à base de polystyrène réticulé comme catalyseurs pour l'élimination de l'oxygène des milieux aqueux par réduction catalytique.

2. Procédé d'élimination de l'oxygène des milieux aqueux par réduction catalytique de l'oxygène en utilisant des échangeurs anioniques chargés de palladium ou de platine à base de polystyrène réticulé comme catalyseurs, caractérisé en ce que l'on utilise comme catalyseurs des échangeurs anioniques faiblement basiques, macro-poreux et chargés de palladium ou de platine à base de polystyrène réticulé.

3. Procédé selon la revendication 2, caractérisé en ce que l'on utilise comme catalyseurs des échangeurs anioniques faiblement basiques, macroporeux et chargés de palladium qui présentent une teneur en groupes amino primaires, secondaires et/ou tertiaires de 1,0 à 2,0 moles/litre de résine /dont le diamètre moyen des pores est de 50 à 1000 Å et dont la surface interne est de 5 à 200 m²/g de résine et dans lesquels le polystyrène est réticulé par 4 à 12% en poids de divinylbenzène.

4. Procédé selon la revendication 2, caractérisé en ce que l'on utilise comme catalyseurs des échangeurs d'anions faiblement basiques, macro-poreux et chargés de palladium ou de platine qui ont été obtenus par un pré-traitement avec un acide minéral aqueux dilué, imprégnation subséquente avec la solution aqueuse d'un sel complexe de palladium ou de platine qui contient le métal sous forme d'un complexe anionique et réduction successive.